# EUROPEAN PATENT APPLICATION

(11) **EP 2 244 163 A2**
(43) Date of publication of application: **27.10.2010**
(21) Application number: 10160670.5
(22) Date of filing: 22.04.2010
(51) Int. Cl.: G06F 3/01, G06F 3/033

(54) **Rotary input device and electronic equipment**

(30) Priority: 22.04.2009 JP 2009104028
(71) Applicant: Funai Electric Co., Ltd., Daito-shi, Osaka 574-0013 (JP); Pro-tech Design Corporation, Osachi Okaya-shi Nagano 394-0081 (JP)
(72) Inventor: Nagashima, Kenji, Daito-shi Osaka 574-0013 (JP); Takahashi, Kazuhiro, Daito-shi Osaka 574-0013 (JP); Suzuki, Takahiko, Okaya-shi Nagano 394-0081 (JP); Sako, Nobuyuki, Okaya-shi Nagano 394-0081 (JP); Kodaira, Takeshi, Okaya-shi Nagano 394-0081 (JP)
(74) Representative: Grünecker, Kinkeldey, Stockmair & Schwanhäusser Anwaltssozietät

(57) **Abstract**

Disclosed is a rotary input device, including: a rotary operation device rotatable around an axis by receiving a rotation operation of an operator; a rotation driving section to apply a rotary force to the rotary operation device; a pressure detecting section to detect a pressure in an axial direction to the rotary operation device; and a force sense presenting section to present a force sense to the operator operating the rotary operation device by applying a rotary force to the rotary operation device by the rotation driving section when the pressure detecting section detects a predetermined pressure in the axial direction to the rotary operation device.

## Description

### BACKGROUND OF THE INVENTION

### Field of the Invention

The present invention relates to a rotary input device and electronic equipment equipped with the rotary input device.

### Description of Related Art

A rotary input device has hitherto been known which is adopted by electronic equipment, such as a portable terminal machine, audio visual (AV) equipment, and a personal computer, and performs an input operation by a rotation operation of the rotary operation device of the rotary input device. This type of rotary input device is configured to select a selection item displayed on the display screen of the electronic equipment by switching the displayed selection item in order in conjunction with the rotation of the rotary operation device. An operator manually rotates the rotary operation device until an objective selection item is selected and performs the operation to fix the selection, and thereby an instruction according to the selected selection item is input into the electronic equipment.

Because each selection item on the screen of such a rotary input device is switched to be selected only by a rotation operation of the rotary operation device thereof, such a rotary input device has the problem that it is difficult for an operator to recognize the selection of a selection item on the screen as a sense of a hand or a finger of the operator.

Accordingly, for example, Japanese Patent Application Laid-Open Publication No. 2003-228455 discloses a technique for giving an operating feeling of jog dial variability according to the rotation positions thereof by applying a rotary force in the same direction or the reverse direction of the rotation direction of the jog dial. To put it concretely, the jog dial performs an urged rotation in an interval of approaching a selected component (selection item), performs a free rotation in an interval of selecting the selected component, and performs a loaded rotation in an interval of passing the selected component.

Moreover, Japanese Patent Application Laid-Open Publication No. 2003-345499 discloses a technique enabling an operator to perceive a difference between two kinds of operation processing by operational feelings by switching the two kinds of operation processing according to the speed of the rotation operation of a dial.

The technique disclosed in Japanese Patent Application Laid-Open Publication No. 2003-228455, however, cannot give an operator any operating feelings at the time of depressing the jog dial, although the technique can give the operating feeling of the jog dial variability at the time of rotating it to transit the selection item from a certain one to the next one.

Moreover, also the technique disclosed in Japanese Patent Application Laid-Open Publication No. 2003-345499 cannot similarly give an operator any operating feelings at the time of depressing the dial, although the technique can enable the operator thereof to perceive the difference in the operation processing of a rotation operation of the dial by the operation feeling of the dial.

That is, both the techniques disclosed in Japanese Patent Application Laid-Open Publications Nos. 2003-228455 and 2003-345499 have no sensible signals capable of an operator to judge whether an input by a depression operation of a rotary operation device has surely been performed or not.

### SUMMARY OF THE INVENTION

It is an object of the present invention to provide a rotary input device realizing a more real operating feeling of a depression operation of a rotary operation device to enable an operator to surely perceive an input by a depression operation of the rotary operation device, and electronic equipment equipped with the rotary input device.

According to a first aspect of the invention, there is provided a rotary input device, including: a rotary operation device rotatable around an axis by receiving a rotation operation of an operator; a rotation driving section to apply a rotary force to the rotary operation device; a pressure detecting section to detect a pressure in an axial direction to the rotary operation device; and a force sense presenting section to present a force sense to the operator operating the rotary operation device by applying a rotary force to the rotary operation device by the rotation driving section when the pressure detecting section detects a predetermined pressure in the axial direction to the rotary operation device.

According to a second aspect of the invention, there is provided a rotary input device, including: a rotary operation device rotatable around an axis by receiving a rotation operation of an operator; a rotation driving section to give a rotary force to the rotary operation device; a plurality of pressure detecting sections provided around an axis of the rotary operation device to detect a pressure in the axial direction to the rotary operation device; a force sense presenting section to present a force sense to the operator operating the rotary operation device by applying a rotary force to the rotary operation device by the rotation driving section when the pressure detecting section detects a predetermined pressure in the axial direction to the rotary operation device; and a depression position specifying section to specify a depression position of the rotary operation device by performing a vector operation of pressurization quantities detected the respective pressure detecting sections; and an execution section to execute an operation content based on the depression position specified by the depression position specifying section, wherein the force sense presenting section changes the force sense stepwise or continuously according to the magnitude of the pressure detected by the pressure detecting section; the force sense presenting section to give the operator the force sense by rotating the rotary operation device in one direction by a predetermined angle when the pressure detecting section detects a predetermined depression, and after that, by rotating the rotary operation device in the other direction by a predetermined angel when the pressure detecting section detects repulsion of depressing.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a perspective view of a cellular phone handset equipped with a rotary input device of an embodiment to which the present invention is applied;
FIG. 2 is a block diagram showing the functional configuration of the cellular phone handset of the present embodiment;
FIG. 3 is a perspective view showing the external appearance of the rotary input device of the present embodiment;
FIG. 4 is a sectional view taken along the line IV-IV of FIG. 3;
FIG. 5 is an exploded view of a rotary input device of the present embodiment;
FIG. 6 is a view showing an example of a display screen displayed on the display section of the rotary input device;
FIG. 7 is a view showing another example of the display screen displayed on the display section; and
FIG. 8 is a flow chart showing force sense presenting processing performed in the cellular phone handset of the present embodiment.

### DETAILED DESCRIPTION OF THE PREFERRED EMBODIMENTS

In the following, an embodiment of the present invention will be described in detail by reference to the accompanying drawings. Incidentally, the scope of the present invention is not limited to the shown examples.

In the present embodiment, it is intended to describe the present embodiment by illustrating a cellular phone handset performing verbal communication by wireless communication as electronic equipment equipped with a rotary input device according to the present invention.

Incidentally, in the following description, it is supposed that the side on which a rotary input device 10 and a display panel 331 of a display section 33 are arranged is treated as the front side, and the side opposed to the side on which the rotary input device 10 and the display panel 331 are arrange is treated as the back side in a cellular phone handset 1 of the present embodiment. Then, the side on which the display panel 331 is arranged is treated as the top side; the side on which the rotary input device 10 is arranged is treated as the bottom side; and the direction perpendicular to both of the front-back direction and the top-bottom direction is treated as the left-right direction.

Moreover, various operation inputs are performed into the cellular phone handset 1 with the rotary input device 10 in the present embodiment. For example, when the rotary operation device 13 of the rotary input device 10 is operated to rotate, the screen displayed in the display section 33 is switched to be selected or scrolled in accordance with this rotation operation. Moreover, when the rotary operation device 13 of the rotary input device 10 is operated to be depressed, a rotary force is applied to the rotary operation device 13 in accordance with this depression operation to present a force sense to the operator.

Here, the "force sense" does not mean the sense of touch caused by a mere vibration, but means a weight sense applied to a finger at the time of rotating the rotary operation device 13 with the finger. To put it concretely, the "force sense" means a sense of feeling a rotating to be light or feeling the rotation to be heavy. To put it more concretely, the "force sense" means a sense applied to a finger at the time of rotating the rotary operation device 13 for, for example, 3-6 msec or by 1-5 degrees with a force equal to or more than 0.05 Ncm by the finger.

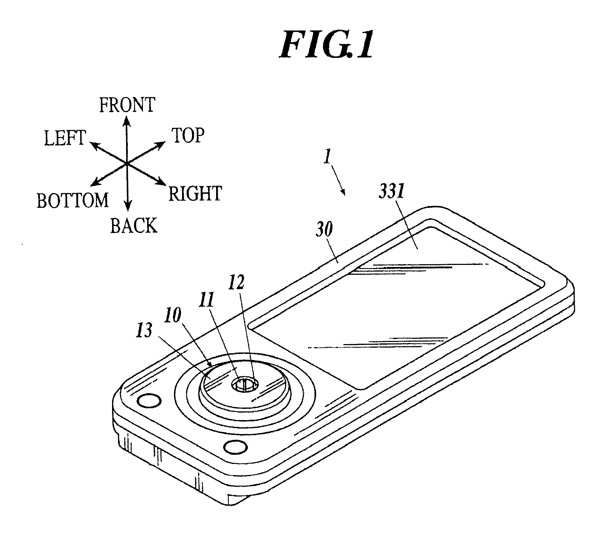

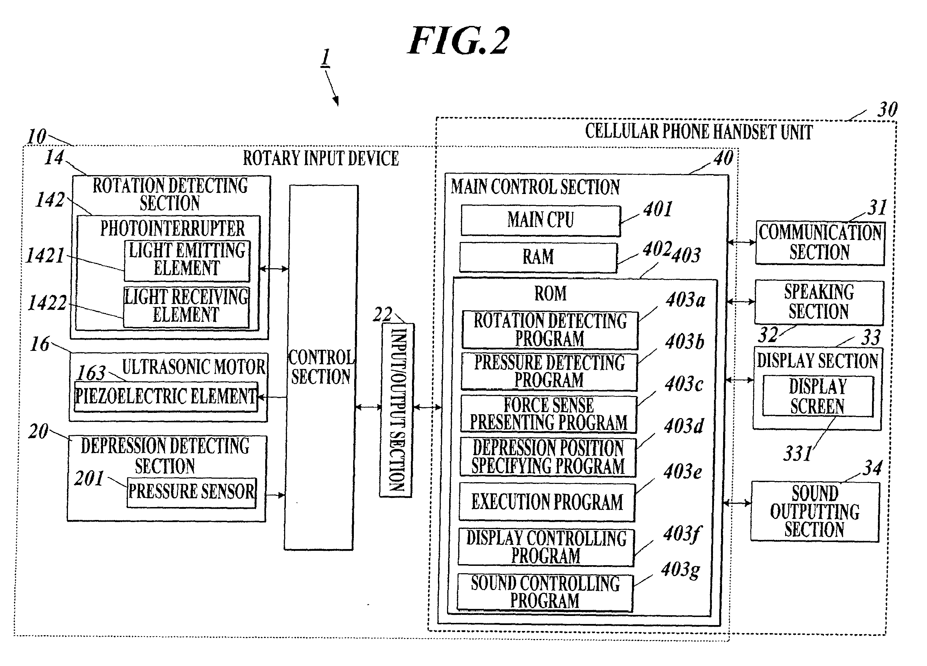

The cellular phone handset 1 is composed of, as shown in FIGS. 1 and 2, for example, the rotary input device 10 for an input operation of an operator, a cellular phone handset unit 30 operated by the rotary input device 10, and a main control section 40 performing the integrated control of the cellular phone handset 1.

First, the rotary input device 10 of the present embodiment is described.

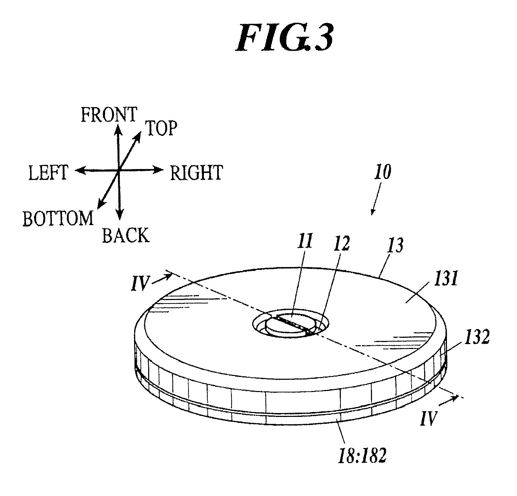

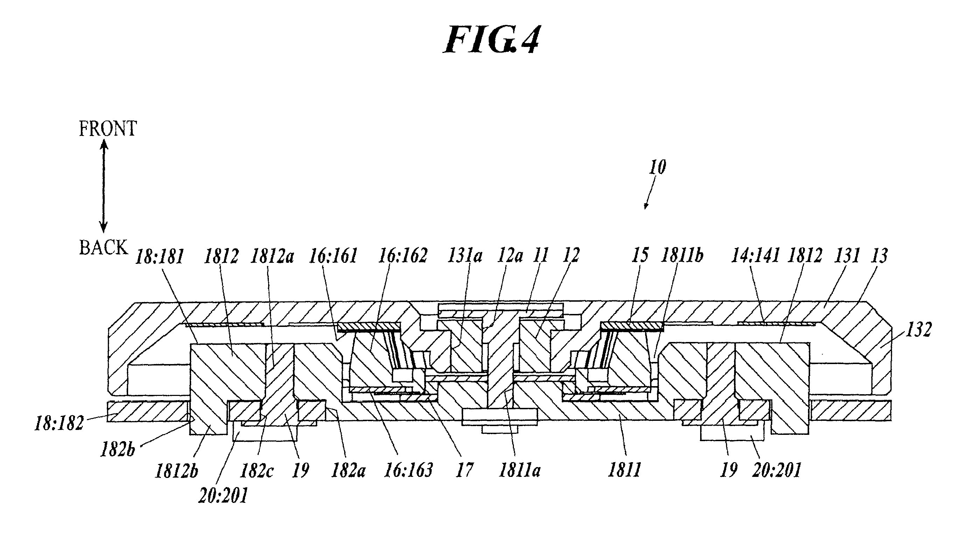

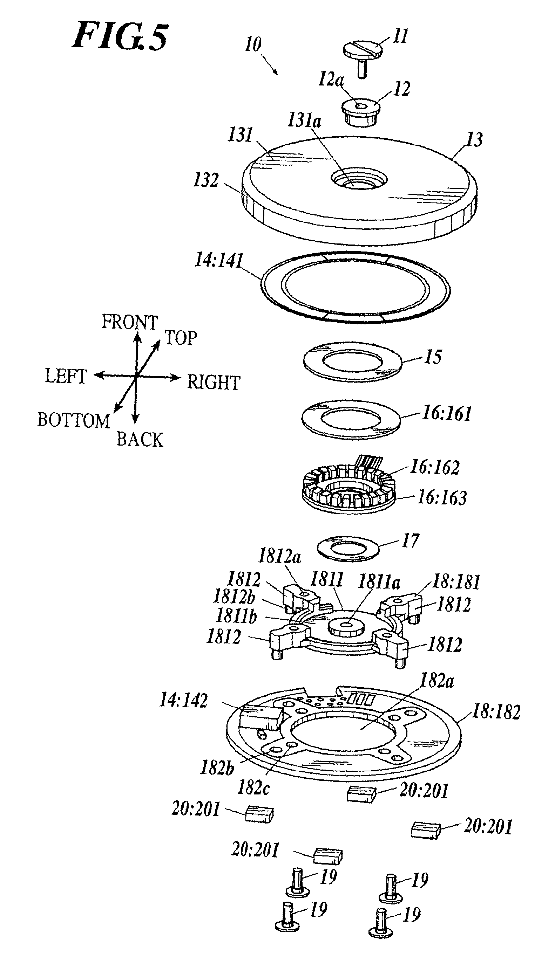

The rotary input device 10 is equipped with, for example, as shown in FIGS. 2-5, a rotary operation device 13, which an operator can manually rotate, and a supporting stand 18, which is provided on the back side of the rotary operation device 13 to support the rotary operation device 13 rotatably. The whole shape of the rotary input device 10 is formed into an almost a disk shape.

The rotary operation device 13 is equipped with a circular front surface section 131 including an aperture section 131a at the center thereof, and a circumferential surface section 132 projecting from the edge portion of the front surface section 131 to the back over the whole circumference. The rotary operation device 13 is provided at a position to cover the front side of the supporting stand 18, and consequently the front surface section 131 and the circumferential surface section 132 are form the front surface and the circumferential surface of the rotary input device 10, respectively.

The front surface section 131 forms the operation surface for a rotation operation by an operator, and the operator performs an input operation into the cellular phone handset unit 30 by rotating the rotary operation device 13 while pressing down a point of the front surface section 131 with a fingertip or while pinching the circumferential surface section 132.

The rotary operation device 13 may be formed of, for example, a material having a radiation performance, such as aluminum, or a material having a strong resistance property to an impact from the outside, alternatively may be formed of a resin or the like.

The supporting stand 18 is equipped with a base 181 and a polychlorinated biphenyl (PCB) substrate 182 connected to the base 181. By providing the supporting stand 18 at a position to cover the an aperture on the back side of the rotary operation device 13, the supporting stand 18 forms the back surface of the rotary input device 10.

The base 181 is equipped with an almost doughnut disk-like pedestal section 1811 having an aperture at the center thereof and four extension sections 1812 extending toward the outside from the peripheral portion of the pedestal section 1811.

Each of the extension sections 1812 is provided with a threaded hole 1812a for attaching a screw and a projection 1812b formed on the back surface further outward than the threaded hole 1812a to extend toward the rear.

The base 181 is made of a material, such as polycarbonate.

The PCB substrate 182 is formed in a tabular ring having almost the same outer diameter as that of the rotary operation device 13, and the pedestal section 1811 of the base 181 is fit into an aperture section 182a at almost the center of the PCB substrate 182. Moreover, the PCB substrate 182 is provided with four attaching holes 182b for attaching the projections 1812b provided on the back surface of each of the extension sections 1812 of the base 181 to project backward are formed in the PCB substrate 182 correspondingly to the projections 1812b, respectively. Then, the PCB substrate 182 and the base 181 are integrally connected to each other by attaching the pedestal section 1811 of the base 181 to the aperture section 182a of the PCB substrate 182, and by fitting the projections 1812b of the base 181 into the attaching holes 182b of the PCB substrate 182, respectively.

Moreover, four hole sections 182c, each having a diameter slightly larger than that of each of the threaded holes 1812a of the base 181, are formed in the PCB substrate 182 at positions overlapping the threaded holes 1812a, respectively, correspondingly to the threaded holes 1812a, respectively. A screw 19 is screwed from the back side of the PCB substrate 182 into each of the threaded holes 1812a of the base 181 through each of the hole sections 182c of the PCB substrate 182, and thereby the PCB substrate 182 and the base 181 are fixed to each other.

Moreover, a depression detecting section 20 as a pressure detecting section to detect an axial direction (front-back direction) pressure to the rotary operation device 13 is arranged on the back surface side of the PCB substrate 182.

Furthermore, a bearing 12 is provided to be arranged on the inner circumferential surface of the aperture section 131a of the front surface section 131 with which the rotary operation device 13 is equipped, a screw 11 to function as a rotation shaft of the rotary operation device 13 is inserted into a through-hole 12a at the center of the bearing 12. Then, the screw 11 and the supporting stand 18 are fix to each other by inserting the screw 11 into the through-hole 12a of the bearing 12 from the front side of the rotary operation device 13 and further by screwing the back end part of the screw 11 projecting backward into the female screw formed on the inner circumferential surface of the aperture 1811a at the center of the pedestal section 1811 with which the base 181 is equipped. Hereby, the rotary operation device 13 is connected to the supporting stand 18 rotatably around the screw 11.

Moreover, a space is formed between the rotary operation device 13 and the supporting stand 18. In this space, a rotation detecting section 14 detecting a rotation position (rotation angle) of the rotary operation device 13, an ultrasonic motor 16 as a rotation driving section to apply a rotary force to the rotary operation device 13, a control section 21 performing the integrated control of the rotary input device 10, an input/output section 22 performing the transmission and reception of various signals with the main control section 40, and the like are provided to be arranged.

The rotation detecting section 14 is composed of, for example, a ring-like code wheel 141, and a photointerrupter 142 detecting the rotation angle displacement of the code wheel 141.

The code wheel 141 is fixated on the inner surface (back surface) of the front surface section 131 of the rotary operation device 13 with the center of the code wheel 141 agreeing with the center of the rotary operation device 13, and rotates in conjunction with a rotation of the rotary operation device 13. A reflecting surface reflecting light is printed on the back surface of the code wheel 141 in a detection pattern including two kinds of phases of A phases and B phases along the circumferential direction of the code wheel 141 at a predetermined pitch.

The photointerrupter 142 is a reflection type photointerrupter composed of a light emitting element 1421, such as a light emitting diode (LED), and a light receiving element 1422, such as a photo integrated circuit (IC). The photointerrupter 142 is mounted at a position opposed to the code wheel 141 on the front surface of the PCB substrate 182, and is connected to the control section 21. The light receiving element 1422 includes at least two light receiving surfaces and is configured to output the detection signals of the A phase and the B phase, which differs from each other by 90 degrees.

The photointerrupter 142 receives the reflected light of a light emitted by the light emitting element 1421 toward the code wheel 141 with the light receiving element 1422 to count the received reflected light, and thereby detects the rotation quantity and rotation direction of the rotary operation device 13 to output the detection result to the control section 21. The control section 21 outputs the detection result from the photointerrupter 142 to the main control section 40 through the input/output section 22, and the main control section 40 specifies the rotation angle of the rotary operation device 13 on the basis of the detection result.

The ultrasonic motor 16 is composed of, for example, a piezoelectric element 163, a ring-like stator (vibrating body) 162 and a rotor 161 touching the front surface of the stator 162. The ultrasonic motor 16 drives the rotary operation device 13 in accordance with a control signal from the control section 21 to rotate the rotary operation device 13 around the shaft thereof.

The stator 162 is fit into a ring-like concave portion 1811b formed on the front surface of the pedestal section 1811 with which the base 181 is equipped, and is fixed to the base 181 with a tabular ring-like double-coated adhesive tape 17.

The stator 162 is equipped with a plurality of convex parts provided to be arranged along the circumferential direction of the stator 162 at the front part thereof, and the stator 162 is equipped with the plurality of piezoelectric elements 163, which generates vibrational energy in response to an application of a drive voltage based on a drive signal and is arranged along the circumferential direction of the stator 162 on the back surface thereof.

The rotor 161 is made of a material, such as high-molecular polyethylene, and has a tabular ring-like shape.

The rotor 161 is provided to be arranged at a position sandwiched between the stator 162 and the rotary operation device 13 on the inner circumference side of the code wheel 141, and is fixed to the rotary operation device 13 with a tabular ring-like double-coated adhesive tape 15 in the state of being arranged so that the center of the rotor 161 agrees with are the center of the rotary operation device 13. The rotor 161 rotates in conjunction with the rotary operation device 13. That is, the front surface of the rotor 161 is adhered to the back surface of the double-coated adhesive tape 15 adhered on the back surface of the front surface section 131, with which the rotary operation device 13 is equipped, and the back surface of the rotor 161 is touched to the convex parts of the stator 162. The back surface of the rotor 161 is made to have a high friction coefficient, and is configured to rotate in the counter direction to the direction of a progressive wave produced by a vibration of the stator 162 touched to the back surface.

The piezoelectric element 163 is connected to the control section 21. When a drive voltage according to a predetermined drive signal is applied from the control section 21 to the piezoelectric element 163, the whole stator 162 vibrates by the ultrasonic vibration of the piezoelectric element 163, and a progressive wave caused by the vibration is transmitted to the rotor 161 to rotate the rotor 161. Then, the rotary force of the rotor 161 is transmitted to the rotary operation device 13 to rotate the rotary operation device 13. Furthermore, the rotary input device 10 is configured to enable an operator to freely set the magnitude of the rotary force of the rotary operation device 13 and the rotation direction thereof caused by the ultrasonic vibration of the piezoelectric element 163 by controlling the drive frequency of the drive voltage to be applied to the piezoelectric element 163.

The depression detecting section 20 includes four pressure sensors 201 severally fixated at four positions on the top side, the bottom side, the left side, and the right side on the back surface of the PCB substrate 182 as part of the pressure detecting section, and is connected to the control section 21. The four pressure sensors 201 are arranged at regular intervals around the around the central axis of the rotary operation device 13.

The depression detecting section 20 detects a depression of the rotary operation device 13 in the axial direction (front-back direction) thereof with the respective pressure sensors 201 to output the detection results to the control section 21.

The control section 21 outputs the detection results from the depression detecting section 20 to the main control section 40 through the input/output section 22. Then, the main control section 40 specifies the depressed position of the rotary operation device 13 on the basis of the detection results, and calculates the depression force at the depressed position of the rotary operation device 13.

Incidentally, as the pressure sensors 201, e.g. a resistive film type pressure sensor, a diffusion type one, a film formation type one, an electrical capacitance type one, and a mechanical type one can be used.

Moreover, although the configuration of being equipped with the four pressure sensors 201 is described in the present embodiment, the number of the pressure sensors 201 is not limited to four, but is arbitrary as long as the number is two or more.

Moreover, the rotary operation device 13, the code wheel 141, and the rotor 161 are provided to be arranged at the positions where the central axes of their rotations are coaxial, and they are arranged to severally rotate around the screw 11 fixed on the supporting stand 18 as the rotation shaft.

The control section 21 is composed of, for example, a central processing unit (CPU), a random access memory (RAM), and a read only memory (ROM) (all not shown).

The control section 21 is connected to the main control section 40 through the input/output section 22. The control section 21 outputs the signals input from the respective sections constituting the rotary input device 10 to the main control section 40, and performs the centralized control of the operations of the respective sections constituting the rotary input device 10 in accordance with the control signals input from the main control section 40.

To put it concretely, the control section 21 is connected to the photointerrupter 142 in the rotation detecting section 14. The control section 21 instructs the light emitting element 1421 of the photointerrupter 142 to emit light in accordance with a control signal input from the main control section 40 through the input/output section 22, and outputs a detection signal of a detection result input from the light receiving element 1422 of the photointerrupter 142 to the main control section 40 through the input/output section 22. Hereby, the main control section 40 specifies the rotation angle of the rotary operation device 13.

Moreover, the control section 21 is connected to the ultrasonic motor 16 to output a predetermined drive signal to the piezoelectric element 163 of the ultrasonic motor 16 in accordance with the control signal input from the main control section 40 through the input/output section 22. Hereby, the rotary operation device 13 rotates around the central axis thereof.

Moreover, the control section 21 is connected to the depression detecting section 20 to output a detection signal of a detection result input from the depression detecting section 20 to the main control section 40 through the input/output section 22. Hereby, the main control section 40 specifies the depressed position of the rotary operation device 13 and the depression force when the rotary operation device 13 is depressed.

The input/output section 22 is connected to the main control section 40. The input/output section 22 outputs the signals input from the respective sections constituting the rotary input device 10 to the main control section 40, and on the other hand outputs the control signals input from the main control section 40 to the control section 21.

To put it concretely, the input/output section 22 transmits the signals showing the rotary angles of the rotation positions of the rotary operation device 13, which rotary angles have been detected in the control section 21 on the basis of the rotation quantities and rotation directions output from the rotation detecting section 14, to the side of the cellular phone handset unit 30. Moreover, the input/output section 22 transmits the signals, which indicate a depression force and a depressed position in a rotation operation of the rotary operation device 13 detected in the control section 21 on the basis of detection values output from the four respective pressure sensors 201 provided to be arranged on the back side of the PCB substrate 182, to the side of the cellular phone handset unit 30.

Incidentally, the rotary input device 10 may be configured to transmit the signals output from the rotation detecting section 14 and the respective pressure sensors 201 to the side of the cellular phone handset unit 30 in the forms of analog signals without performing their analog-to-digital (A/D) conversions.

Next, the cellular phone handset unit 30 according to the present embodiment will be described.

The cellular phone handset unit 30 is equipped with an antenna (not shown), and includes, as shown in FIG. 2, a communication section 31 performing the transmission and reception of wireless signals with external equipment, a speaking section 32 enabling an operator to perform telephonic communication with a third person, the display section 33 making the display screen 331 thereof display various screens, a sound outputting section 34 performing sound output, and the main control section 40 performing the integrated control of the whole cellular phone handset 1.

Incidentally, because publicly known techniques are used for the communication section 31 and the speaking section 32 for realizing the verbal communication function with external equipment by means of wireless signals, their detailed descriptions are omitted.

The display section 33 includes the display screen 331, such as a liquid crystal display (LCD), to make the display screen 331 display various screens in accordance with the instructions from the main control section 40.

The various screens displayed on the display screen 331 are switched according to the rotation operations and the depression operations of the rotary operation device 13 by an operator.

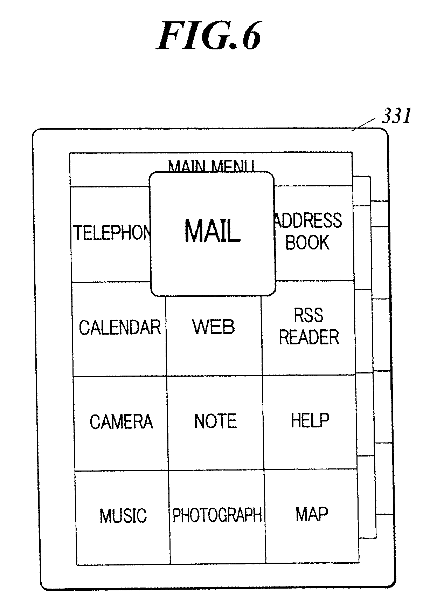

For example, as shown in FIG. 6, if an operator operates the front surface section 131 of the rotary operation device 13 to rotate the rotary operation device 13 when a plurality of thumbnail screens is displayed on the display screen 331, then the thumbnail screens displayed on the display screen 331 are sequentially switched to be selected according to rotation operations. FIG. 6 is an example showing the state in which a thumbnail screen selected by a rotation operation is enlarged.

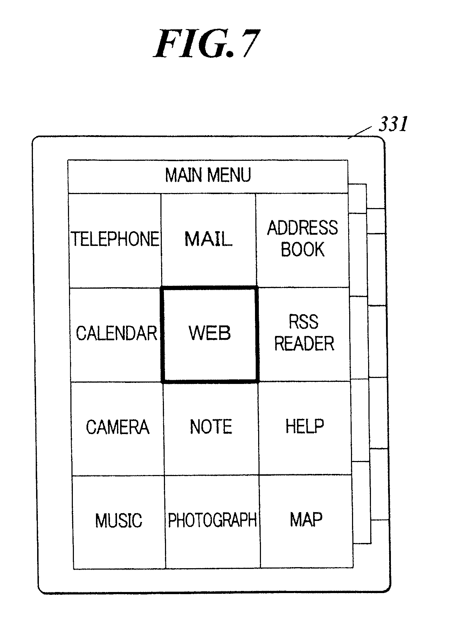

Moreover, if an operator performs a depression operation of the front surface section 131 of the rotary operation device 13 when a plurality of thumbnail screens is displayed on the display screen 331, then, as shown in FIG. 7, the display mode of the image (selected part) selected at the time point of the depression operation is changed.

Here, the change of the display mode means a change of a selected part to a display identifiable from the other parts, and means, for example, highlighting by the reversing of colors, edging, shadowing, and the like. FIG. 7 is an example of the state in which a thumbnail screen selected by a depression operation is highlighted by edging.

If the front surface section 131 of the rotary operation device 13 is operated to be depressed by an operator, the main control section 40 executes various operations based on the image (at the depression position) selected at the time of the depression operation. The detailed contents of the various operations are, for example, as shown in FIGS. 6 and 7, known functions, such as a telephone function, a mail function, address book displaying, calendar displaying, WEB connecting, a rich site summary (RSS) reader function, camera photographing, a note function, a help function, a music function, photograph displaying, and map displaying.

The sound outputting section 34 is equipped with a speaker (not shown) to reproduce sound data, and makes the speaker reproduce a sound on the basis of a sound output signal input from the main control section 40.

The main control section 40 includes a main CPU 401, a RAM 402, a ROM 403, and the like, and is connected to the control section 21 of the rotary input device 10. The main control section 40 controls the respective sections of the cellular phone handset unit 30 on the basis of the input operation signals transmitted from the rotary input device 10.

The main CPU 401 reads out processing programs and the like stored in the ROM 403 in accordance with the input signals input from the cellular phone handset unit 30 and the respective sections of the rotary input device 10. The main CPU 401 expands the read-out programs and the like in the RAM 402 to execute them. Then, the main CPU outputs control signals to the respective sections to perform the control of the whole rotary input device.

The RAM 402 stores a program storing region for expanding the various programs executed by the main CPU 401 and a data storing region for storing input data, processing results produced at the time of the execution of these processing programs, and the like, and the RAM 402 is used as a work area of the main CPU 401.

The ROM 403 stores the processing programs, data, and the like beforehand, and stores various processing programs, such as a rotation detecting program 403a, a pressure detecting program 403b, a force sense presenting program 403c, a depression position specifying program 403d, an execution program 403e, a display controlling program 403f, and a sound controlling program 403g.

Incidentally, an operation content specifying table, in which the depression positions of the rotary operation device 13 are associated with the operation contents assigned to the respective depression positions may be stored in the ROM 403, and the main CPU 401 may execute processing by referring to the operation content specifying table when an arbitrary position of the rotary operation device 13 is depressed.

The rotation detecting program 403a is, for example, a program enabling the main CPU 401 to realize the function of detecting the rotation positions (rotation angles) of the rotary operation device 13.

To put it concretely, the main CPU 401 executes the rotation detecting program 403a to detect the rotation quantity and the rotation direction of the rotary operation device 13 with the photointerrupter 142 when an operator performs a rotation operation of the rotary operation device 13, and specifies the rotation angle of the rotary operation device 13 on the basis of the detection results.

The pressure detecting program 403b is, for example, a program enabling the main CPU 401 to realize the function of detecting a pressure in the axial direction of the rotary operation device 13.

To put it concretely, the main CPU 401 executes the pressure detecting program 403b to detect the depression in the axial direction (front-back direction) of the rotary operation device 13 with the respective pressure sensors 201 of the depression detecting section 20 when an performs a depression operation of the rotary operation device 13.

The main CPU 401 functions as the pressure detecting section together with the depression detecting section 20 by executing the pressure detecting program 403b.

The force sense presenting program 403c is a program enabling the main CPU 401 to realize, for example, the function of presenting a force sense to an operator operating the rotary operation device 13.

To put it concretely, when the main CPU 401 detects a predetermined pressure in the axial direction of the rotary operation device 13 by executing the pressure detecting program 403b, the main CPU 401 executes the force sense presenting program 403c to apply a rotary force to the rotary operation device 13 with the ultrasonic motor 16, and thereby the main CPU 401 presents a force sense to the operator operating the rotary operation device 13.

To put it more concretely, when the main CPU 401 detects a predetermined depression (X1) in the axial direction of the rotary operation device 13 with the pressure sensors 201 by executing the pressure detecting program 403b, the main CPU 401 executes the force sense presenting program 403c to apply a rotary force to the rotary operation device 13 by the ultrasonic motor 16 to rotate the rotary operation device 13 in one direction (forward rotation) by a predetermined angle.

Then, as described above, the main CPU 401 may performs the control of perform the reverse rotation of the rotary operation device 13 according to the relief of depression after performing the forward rotation of the rotary operation device 13 in response to the detection of the predetermined depression (X1).

To put it concretely, the main CPU 401 continues the detection of the depression applied to the rotary operation device 13 with the pressure sensors 201 also after performing the forward rotation of the rotary operation device 13. That is, the pressure sensors 201 continues detecting the depression while a depression equal to or more than the predetermined depression (X1) is applied to the rotary operation device 13. Then, if the depression applied to the rotary operation device 13 in the time point of detecting the depression is relieved, then the main CPU 401 executes the reverse rotation of the rotary operation device 13.

Incidentally, the main CPU 401 may be set not to perform the reverse rotation of the rotary operation device 13 when the relief of the depression is detected by the pressure sensors 201.

Moreover, at this time, the main CPU 401 can also change the force sense stepwise according to the magnitude of the pressure in the axial direction of the rotary operation device 13, which pressure is detected by the execution of the pressure detecting program 403b.

To put it concretely, if the magnitude of the pressure in the axial direction is within a predetermined range (from X1 to X2; X1 < X2), the main CPU 401 applies a rotary force of a first value to the rotary operation device 13 to present the force sense. If the magnitude of the pressure in the axial direction is larger than X2, the main CPU 401 sets the rotary force to be applied to the rotary operation device 13 to a second value larger than the first value, and thereby the main CPU 401 presents a larger force sense.

Incidentally, as the method of changing the force sense according to the magnitude of the pressure in the axial direction, the method of changing the force sense continuously may be adopted besides the aforesaid method of changing the force sense stepwise.

The main CPU 401 functions as the force sense presenting section by executing the force sense presenting program 403c.

The depression position specifying program 403d is, for example, a program enabling the main CPU 401 to realize the function of specifying the depression position in the rotary operation device 13 at the time of depressing the rotary operation device 13.

To put it concretely, when the main CPU 401 detects the predetermined pressure in the axial direction of the rotary operation device 13 by executing the pressure detecting program 403b, the main CPU 401 executes the depression position specifying program 403d to detects the pressurization quantities at the respective pressure sensors 201, performs the vector operations of the pressurization quantities at the respective pressure sensors 201, specifies the depressed position in the rotary operation device 13, and calculates the depression force at the depressed position.

To put it concretely, the present embodiment is provided with the four pressure sensors 201 and is configured to be able to specify, for example, eight positions composed of four positions corresponding to the respective pressure sensors 201 and four positions corresponding to intermediate points of the respective adjoining two pressure sensors 201 among the four pressure sensors 201.

The main CPU 401 functions as a depression position specifying section by executing the depression position specifying program 403d.

The execution program 403e is a program enabling the main CPU 401 to realize, for example, the function of executing the operation contents based on a depression position.

To put it concretely, when the main CPU 401 specifies a depression position in the rotary operation device 13 when the rotary operation device 13 is depressed by the execution of the depression position specifying program 403d, the main CPU 401 executes the execution program 403e to select the item situated in the direction of the specified depression position among the selection items, and executes the contents thereof.

The main CPU 401 functions as an execution section by executing the execution program 403e.

The display controlling program 403f is a program enabling the main CPU 401 to realize, for example, the function of changing the display mode of an image displayed on the display screen 331 when a pressure in the axial direction of the rotary operation device 13 is detected.

To put it concretely, when the main CPU 401 detects the predetermined pressure in the axial direction of the rotary operation device 13 by executing the pressure detecting program 403b, the main CPU 401 performs the display control of the image on the display screen 331 corresponding to the depression position specified by the depression position specifying program 403d. That is, the main CPU 401 changes the display mode of the selected part selected at the time point when the predetermined pressure has been detected (see FIG. 7).

The main CPU 401 functions as a display control section by executing the display controlling program 403f.

The sound controlling program 403g is a program enabling the main CPU 401 to realize, for example, the function of outputting a sound when the predetermined pressure in the axial direction of the rotary operation device 13 is detected.

To put it concretely, when the main CPU 401 detects the predetermined pressure in the axial direction of the rotary operation device 13 by the execution of the pressure detecting program 403b, the main CPU 401 outputs a predetermined sound with the speaker of the sound outputting section 34.

The main CPU 401 functions as a sound controlling section by executing the sound controlling program 403g.

Incidentally, the rotary input device 10 of the present embodiment is composed of the aforesaid rotation detecting section 14, the ultrasonic motor 16, the depression detecting section 20, the control section 21, the input/output section 22, and the main control section 40.

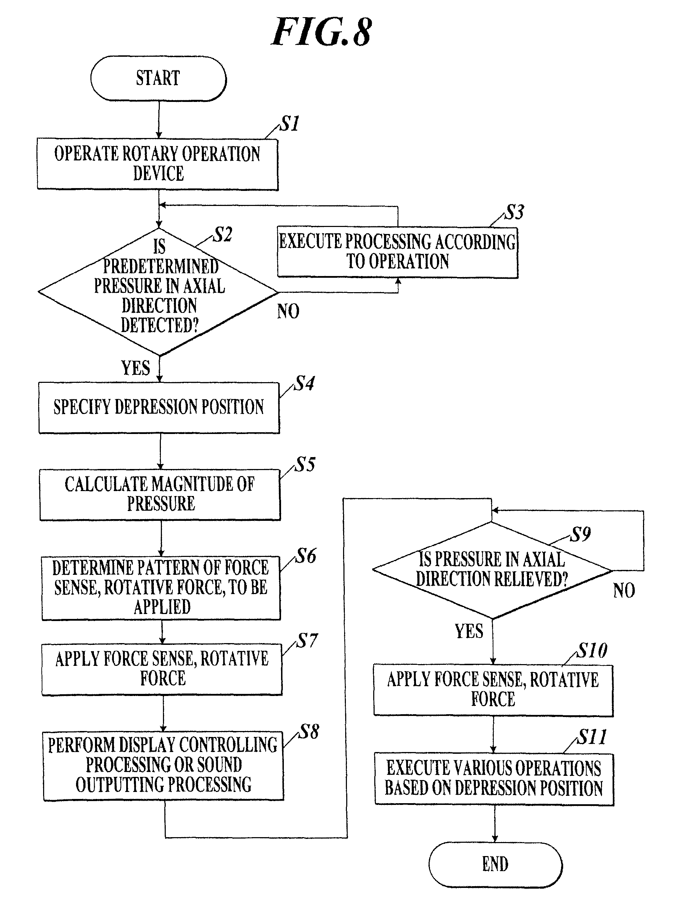

Next, the force sense presenting processing of the cellular phone handset 1 (rotary input device 10) of the present embodiment will be described with reference to the flow chart of FIG. 8.

First, an operator operates the rotary operation device 13 at Step S1, and the main control section 40 judges whether the predetermined pressure is detected in the axial direction in the operation or not at Step S2.

Then, if the predetermined pressure is not detected in the axial direction (Step S2; NO), then the main control section 40 executes the processing corresponding to the operation of the rotary operation device 13 at the next Step S3, and after that, returns the processing to that at Step S2 to repeat the processing on and after that.

On the other hand, if the predetermined pressure is detected in the axial direction (Step S2; YES), then the main control section 40 performs the vector operations of the pressurization quantities detected at the respective four pressure sensors 201 to specify the depression position of the rotary operation device 13 at the next Step S4.

Next, the main control section 40 calculates the magnitude of the pressure at the specified depression position (within from X1 to X2, or X2 or more) at Step S5.

Next, the main control section 40 determines the pattern of the force sense to be applied (either the rotary force of the first value or the rotary force of the second value) on the basis of the calculated magnitude of the pressure at Step S6.

Next, the main control section 40 applies the rotary force to the rotary operation device 13 to present the force sense to an operator at Step S7.

Next, the main control section 40 executes the display controlling processing or the sound outputting processing at Step S8.

Next, the main control section 40 judges whether the pressure in the axial direction is relieved or not at Step S9. If the pressure is not relieved (Step S9; NO), then the main control section 40 returns the processing to that at Step S9 and repeat the judgment.

On the other hand, if the pressure in the axial direction is relieved (Step S9; YES), then the main control section 40 presents a rotary force to the rotary operation device 13 at the next Step S10 to present a force sense to the operator.

Next, the main control section 40 executes the various operations based on the depression position specified at Step S4 at Step S11, and ends the present processing.

As described above, according to the present embodiment, if a pressure in the axial direction is applied to the rotary operation device 13, a rotary force is applied to the rotary operation device 13, and a force sense is presented to the operator operating the rotary operation device 13. Consequently, more real operating feeling is realized to the depression operation of the rotary operation device 13, and the operator can surely perceive the performance of input by a depression operation.

Moreover, because the presentation of a force sense can be performed without burying the rotary operation device 13 in the front-back direction, the thinning of the device can be realized.

Moreover, because the force sense to be applied is stepwise or continuously changes according to the magnitude of the pressure in the axial direction of the rotary operation device, input operations by depressions of different magnitudes can be realized, and a more real operating feeling can be realized.

Moreover, because operation contents are specified on the basis of a depression position of the rotary operation device 13, the rotary input device 10 can be used more easily.

Moreover, it is possible to give an operator a suitable force sense by rotating the rotary operation device 13 by a predetermined angle in one direction when a pressure in the axial direction of the rotary operation device 13 is detected. That is, it is possible to give an operator a pseudo clicking feeling.

Moreover, it is possible to give an operator a suitable force sense by rotating the rotary operation device 13 in one direction by a predetermined angle at the time of detecting a pressure in the axial direction to the rotary operation device 13, and by rotating the rotary operation device 13 in the other direction by a predetermined angle at the time of relieving the pressure in the axial direction. That is, it is possible to given an operator a pseudo clicking feeling.

Moreover, because the display mode of a selected part selected on the display screen 331 at the time point of detecting a pressure in the axial direction to the rotary operation device 13 is changed at the time point, the applying of a force sense and the change of a screen display mode are simultaneously executed, and the rotary input device can be made to be more easily used.

Moreover, because the sound is output at the time of detecting a pressure in the axial direction to the rotary operation device 13, the applying of a force sense and the output of a sound are simultaneously performed, and the rotary input device can be made to be more easily used.

Incidentally, the scope of the present invention is not limited to the contents described above, but various improvements and changes of the design may be performed without departing from the spirit of the present invention.

For example, although the cellular phone handset 1 is illustrated as the electronic equipment equipped with the rotary input device 10 according to the present invention in the embodiment described above, the rotary input device of the present invention is not only applied to the cellular phone handset, but also can be applied to any electronic equipment as long as the electronic equipment can perform an input operation with a rotary input device. For example, the rotary input device of the present invention may be applied to the other portable terminal devices, such as a portable audio player and a personal digital assistance (PDA), AV equipment, such as a television receiver, a personal computer, and the like. Moreover, the rotary input device may be incorporated in the electronic equipment in advance, and may be used by being connected to the electronic equipment as an external device of a single body.

Moreover, although, for example, the optical rotation detecting section 14 composed of the toric code wheel 141 and the photointerrupter 142 is illustrated as the rotation detecting section to detect a rotation position of the rotary operation device 13 in the embodiment described above, the rotation detecting section 14 is an example of the rotation detecting section, and any configurations may be used as the rotation detecting section as long as the configurations can detect a rotation position of the rotary operation device 13. For example, a mechanical type (contact type) rotation detecting section, a magnetic type one, and an electrostatic type one detecting a position by a change of the electrostatic capacity of an electrode can be used.

Furthermore, an absolute type rotary encoder capable of detecting an absolute position in addition to the rotation quantity and the rotation direction of the rotary operation device 13 may be used.

Moreover, although, for example, the ultrasonic motor 16 is illustrated as the rotation driving section to drive the rotary operation device 13 by rotating it in the embodiment described above, the ultrasonic motor 16 is only an example of the rotation driving section, and any configurations may be used as long as the configurations can drive the rotary operation device 13 by rotating it. For example, a static actuator performing driving by using the mutual absorption and repulsion of electrostatic charges as motive power, an electromagnetic actuator performing driving by using a force cause by a mutual interaction between a magnetic field and an electric power, a magnetostrictive actuator, an actuator using a hydraulic cylinder or a pneumatic cylinder, and the like can be used. Moreover, as the control of the driving in the rotation driving section, the control of transmitting the motive power of an actuator to a driven body such as the rotary operation device as it is may be used. Alternatively, a stepping motor operating in proportion to a drive pulse number may be used. Moreover, an actuator performing driving by rotating a driven body may be used, or a linear actuator performing driving by moving a driven body linearly may be used.

According to the embodiment, there is provided a rotary input device, including: a rotary operation device rotatable around an axis by receiving a rotation operation of an operator; a rotation driving section to apply a rotary force to the rotary operation device; a pressure detecting section to detect a pressure in an axial direction to the rotary operation device; and a force sense presenting section to present a force sense to the operator operating the rotary operation device by applying a rotary force to the rotary operation device by the rotation driving section when the pressure detecting section detects a predetermined pressure in the axial direction to the rotary operation device.

Preferably, the force sense presenting section changes the force sense stepwise or continuously according to the magnitude of the pressure detected by the pressure detecting section.

Preferably, a plurality of the pressure detecting sections is set around the axis of the rotary operation device; the rotary input device further includes: a depression position specifying section to perform vector operations of a pressurization quantity detected at each of the pressure detecting sections to specify a depression position in the rotary operation device; and an execution section to execute an operation content based on the depression position specified by the depression position specifying section.

Preferably, the force sense presenting section gives the operator the force sense by rotating the rotary operation device in one direction by a predetermined angle when the pressure detecting section detects a predetermined depression.

Preferably, the force sense presenting section gives the operator the force sense by rotating the rotary operation device in one direction by a predetermined angle when the pressure detecting section detects a predetermined depression, and after that, by rotating the rotary operation device in the other direction by a predetermined angel when the pressure detecting section detects repulsion of depressing.

According to the embodiment, there is provided a rotary input device, including: a rotary operation device rotatable around an axis by receiving a rotation operation of an operator; a rotation driving section to give a rotary force to the rotary operation device; a plurality of pressure detecting sections provided around an axis of the rotary operation device to detect a pressure in the axial direction to the rotary operation device; a force sense presenting section to present a force sense to the operator operating the rotary operation device by applying a rotary force to the rotary operation device by the rotation driving section when the pressure detecting section detects a predetermined pressure in the axial direction to the rotary operation device; and a depression position specifying section to specify a depression position of the rotary operation device by performing a vector operation of pressurization quantities detected the respective pressure detecting sections; and an execution section to execute an operation content based on the depression position specified by the depression position specifying section, wherein the force sense presenting section changes the force sense stepwise or continuously according to the magnitude of the pressure detected by the pressure detecting section; the force sense presenting section gives the operator the force sense by rotating the rotary operation device in one direction by a predetermined angle when the pressure detecting section detects a predetermined depression, and after that, by rotating the rotary operation device in the other direction by a predetermined angel when the pressure detecting section detects repulsion of depressing.

There is also provided electronic equipment, including: a rotary input device according to any one of claims 1-6 (claim 1); and a display section.

Preferably, the electronic equipment further includes: a display control section to change a display mode of a selected part selected when the predetermined pressure is detected among images displayed on the display screen of the display section if the pressure detecting section detects a predetermined pressure in an axial direction to the rotary operation device.

Preferably, the electronic equipmen further includes: a sound outputting section to output a sound; and a sound controlling section to make the sound outputting section a sound when the pressure detecting section detects a predetermined pressure in the axial direction to the rotary operation device.

According to the present invention, when a predetermined pressure in an axial direction is applied to a rotary operation device, a rotary force is applied to the rotary operation device, and a force sense is presented to an operator operating the rotary operation device. Consequently, a more real operating feeling to a depression operation of the rotary operation device is realized, and the operator can surely perceive the input of a depression operation.

## Claims

1. A rotary input device, comprising:
a rotary operation device rotatable around an axis by receiving a rotation operation of an operator;
a rotation driving section to give a rotary force to the rotary operation device;
a pressure detecting section to detect a pressure in an axial direction to the rotary operation device; and
a force sense presenting section to present a force sense to the operator operating the rotary operation device by applying a rotary force to the rotary operation device by the rotation driving section when the pressure detecting section detects a predetermined pressure in the axial direction to the rotary operation device.

2. The rotary input device according to claim 1, wherein the force sense presenting section changes the force sense stepwise or continuously according to the magnitude of the pressure detected by the pressure detecting section.

3. The rotary input device according to claims 1 or 2, wherein
a plurality of the pressure detecting sections is set around the axis of the rotary operation device;
the rotary input device further includes:
a depression position specifying section to perform vector operations of a pressurization quantity detected at each of the pressure detecting sections to specify a depression position in the rotary operation device; and
an execution section to execute an operation content based on the depression position specified by the depression position specifying section.

4. The rotary input device according to any one of claims 1-3, wherein the force sense presenting section give the operator the force sense by rotating the rotary operation device in one direction by a predetermined angle when the pressure detecting section detects a predetermined depression.

5. The rotary input device according to any one of claims 1-3, wherein the force sense presenting section gives the operator the force sense by rotating the rotary operation device in one direction by a predetermined angle when the pressure detecting section detects a predetermined depression, and after that, by rotating the rotary operation device in the other direction by a predetermined angel when the pressure detecting section detects repulsion of depressing.

6. A rotary input device, comprising:
a rotary operation device rotatable around an axis by receiving a rotation operation of an operator;
a rotation driving section to give a rotary force to the rotary operation device;
a plurality of pressure detecting sections provided around an axis of the rotary operation device to detect a pressure in the axial direction to the rotary operation device;
a force sense presenting section to present a force sense to the operator operating the rotary operation device by applying a rotary force to the rotary operation device by the rotation driving section when the pressure detecting section detects a predetermined pressure in the axial direction to the rotary operation device; and
a depression position specifying section to specify a depression position of the rotary operation device by performing a vector operation of pressurization quantities detected the respective pressure detecting sections; and
an execution section to execute an operation content based on the depression position specified by the depression position specifying section, wherein
the force sense presenting section changes the force sense stepwise or continuously according to the magnitude of the pressure detected by the pressure detecting section;
the force sense presenting section gives the operator the force sense by rotating the rotary operation device in one direction by a predetermined angle when the pressure detecting section detects a predetermined depression, and after that, by rotating the rotary operation device in the other direction by a predetermined angel when the pressure detecting section detects repulsion of depressing.

7. Electronic equipment, comprising:
a rotary input device according to any one of claims 1-6; and
a display section.

8. The electronic equipment according to claim 7, further comprising: a display control section to change a display mode of a selected part selected when the predetermined pressure is detected among images displayed on the display screen of the display section if the pressure detecting section detects a predetermined pressure in an axial direction to the rotary operation device.

9. The electronic equipment according to claim 7, further comprising:
a sound outputting section to output a sound; and
a sound controlling section to make the sound outputting section a sound when the pressure detecting section detects a predetermined pressure in the axial direction to the rotary operation device.
